# EUROPEAN PATENT APPLICATION

(11) **EP 2 545 989 A1**
(43) Date of publication of application: **16.01.2013**
(21) Application number: 11173849.8
(22) Date of filing: 13.07.2011
(51) Int. Cl.: B01J 20/26, B01J 20/286, B01J 20/28, B01J 20/32, B01D 15/38

(54) **Composite material for chromatographic applications**

(71) Applicant: InstrAction GmbH, 68199 Mannheim (DE)
(72) Inventor: Schwarz, Thomas, 42799 Leichlingen (DE); Welter, Martin, 69118 Heidelberg (DE); Arendt, Markus, 68766 Hockenheim (DE); Degel, Björn, 67454 Haßloch (DE)
(74) Representative: Stolmár & Partner

(57) **Abstract**

The present application pertains to a composite material for chromatographic applications and a method for the preparation of the composite material.

## Description

The present application pertains to a composite material for chromatographic applications and a method for the preparation of the composite material.

Chromatography media for organic molecules and biomolecules have traditionally been categorized according to one or more of the following possible modes of interaction with a sample:
- hydrophobic interaction (reversed phase)
- hydrophilic interaction (normal phase)
- cation exchange
- anion exchange
- size exclusion
- metal ion chelation.

Traditional stepwise application of the above chromatographic categories to a given separation problem was mirrored in a step-by-step, steady improvement of the product purity but also in product losses at every stage which accumulate seriously in the end, not to mention the operational time and cost of goods. Introduction of affinity chromatography at an early stage into the downstream production process could be an answer to this demand since the reduction of a consecutive series of sequential chromatographic steps into only one could thus be demonstrated many times.

Affinity chromatography is sometimes regarded as a class of its own. Also, from a chemical point of view, it is based on the same interaction modes as above. The principal characteristic of affinity chromatography is its high specificity of a pre-determined analyte which is usually based on a known molecular recognition pair.

Most chromatographic sorbents according to the prior art consist of a solid support material which surface is covered with a thin film of a cross-linked polymer. Polymers such as cross-linked polybutadiene, polystyrene, polysiloxane, poly(meth)acrylate and polyamides have been used in the past. They have been employed primarily with the intent of creating a dense interface which shields the surrounding medium from unwanted interaction with the underlying part (carrier) of the solid support material. Such interactions may lead to unspecific or even irreversible binding of molecules to the sorbent while, on the other hand, constituents of the solid support material or its chemical linkages to ligands may be corroded by aggressive components of either the sample or the eluent.

Polymer-coated sorbents are basically known for applications in all chromatographic categories as they are listed above, but in particular for hydrophobic interaction and size exclusion.

Also known are polymer coatings which are not internally crosslinked but grafted to the carrier material as linear or branched chain, such as the so-called tentacle resins. Affinity chromatography, on the other hand, has mostly been carried out with bulk gel-phase resins.

Pre-eminent gel forming materials are medium-crosslinked polysaccharides, polyacrylamides, and poly(ethylene)oxides. The mechanical resistance of these media is, however, much weaker than that of inorganic support materials since they are compressible under an applied pressure and do not tolerate shear stress caused by agitation, column packing or high liquid flowrates. Affinity sorbents that are fully compatible with rough HPLC process conditions are therefore rare.

Only in the recent past it has been recognized that the mechanical resistance of the stationary phase is a bulk property of the sorbent support where only a thin layer at the interface between the stationary and mobile phases is responsible for mass exchange and for the interaction with the analyte. Therefore, the concept of combining the function of a mechanically very rigid and dimensionally stable porous 3-dimensional core, and a gel-like interface layer which carries the active ligands for binding the analyte have been brought up, and the associated synthetic problems have been technically solved. Such hybrid materials employ loosely crosslinked polymers of high polarity on a base of either an inorganic oxide or a densely crosslinked polymer of low polarity.

Methodologically, they can be prepared by applying the polymer of high polarity onto the core material or by directly polymerizing polar monomers, precursors thereof or a prepolymer in the presence of the core material and a crosslinker. The majority of materials prepared according to the latter method is described in the literature as having either a non-pore penetrating or pore-filling morphology. While non-penetrating films suffer from restricted surface areas available for interaction with the analyte and thus low binding capacities which only depend on the thickness of the polymer film, pore-filling films take advantage of the full inner pore volume of the core material in the interaction with an analyte, which usually results in good binding capacities but slow diffusional mass transfer rates inside the pores and exchange kinetics with the mobile phase.

There is thus still a need for a sorbent material that provides a high surface area for the interaction of a ligand with the analyte, that shows a good binding capacity of the analyte to the ligand and that has a diffusional mass transfer rate inside the pores and exchange kinetics with the mobile phase. In addition, the system should be stable against the influence of the mobile phase and the analyte, which often causes a destruction or loss of the stationary phase.

The invention therefore provides a composite material, in particular for chromatography, comprising a porous support and a crosslinked polymer on the surface of the porous support, wherein the ratio between the pore size [nm] of the porous support and the crosslinking degree [%] of the crosslinked polymer [PSCL-ratio] is from 0.25 to 20, preferably from 0.5 to 15 and most preferred from 1 to 10.

Unexpectedly, it was found that the ratio between the pore size of the solid support material and the crosslinking degree of the adhered polymer is advantageous as this material shows a high stability against the influence of the mobile phase and the analytes and shows a high diffusional mass transfer rate inside the pores and exchange kinetics with the mobile phase. It was found that a composite material with a PSCL-ratio above 25 shows a loss of polymeric material on the surface of the porous support and thus leads to a decrease in purification efficiency. On the other hand, a PSCL-ratio below 0.25 leads to a decrease in purification efficiency as the swelling of the polymer film is limited. In addition, it is believed that the high crosslinking results in a rigid polymer film which might cracks and thus desorbs from the porous support.

The pore size of the porous support is preferably at least 6 nm, more preferably from 10 to 200 nm and most preferably from 15 to 100 nm.

According to an embodiment of the composite material, the porous support has a specific surface area of from 1 m²/g to 1000 m²/g, more preferred of from 30 m²/g to 800 m²/g and most preferred of from 20 to 400 m²/g.

It is preferred that the porous support has a porosity of from 30 to 80 % by volume, more preferred from 40 to 70 % by volume and most preferred from 50 to 60 % by volume. The porosity can be determined by mercury intrusion according to DIN 66133. The pore size of the porous support can also be determined by pore filling with the mercury intrusion method according to DIN 66133. The specific surface area can be determined by nitrogen adsorption with the BET-method according to DIN 66132.

According to one embodiment the porous support is a polymeric material. Preferably the polymeric material is substantially non-swellable (preferably about 5 to 7 vol.-% at most, based on the unswollen material). For that reason, it is mostly preferred that the polymeric material has a high crosslinking degree.

The polymeric material is preferably crosslinked at a degree of at least 10 %, more preferably at least 20 % and most preferably at least 30 %, based on the total number of crosslinkable groups in the polymeric material. Preferably, the crosslinking degree of the polymeric material is 100 % at maximum, more preferably it does not exceed 80 to 90 % %.

Preferably the polymeric material for the porous support is selected from the group consisting of generic or surface-modified polystyrene, (e.g. poly(styrene-co-dinvinylbenzene)), polystyrene sulfonic acid, polyacrylates, polymethacrylates, polyacrylamides, polyvinylalcohol, polysaccharides (such as starch, cellulose, cellulose esters, amylose, agarose, sepharose, mannan, xanthan and dextran), and mixtures thereof.

According to a further embodiment, the porous support is an inorganic material. Preferably the inorganic material is some kind of inorganic mineral oxide, preferably selected from the group consisting of silica, alumina, magnesia, titania, zirconia, fluorosile, magnetite, zeolites, silicates (cellite, kieselguhr), mica, hydroxyapatite, fluoroapatite, metal-organic frameworks, ceramics and glasses, like controlled pore glass (e.g. trisoperl), metals such as aluminium, silicon, iron, titanium, copper, silver, gold and also graphite or amorphous carbon.

Independent of whether the porous support is a polymeric material or an inorganic material, the porous support provides a solid base of a minimum rigidity and hardness which functions as an insoluble support and provides a basis for the enlargement of the interface between stationary and mobile phases which is the place of interaction with the analyte as the molecular basis for the process of the partitioning between said phases, and for an increased mechanical strength and abrasiveness, especially under flow and/or pressurized conditions.

The porous support materials according to the invention may be of homogeneous or heterogeneous composition, and therefore also incorporate materials which are compositions of one or more of the materials mentioned above, in particular multilayered composites.

The porous support may be a particulate material, preferably having a particle size of from 5 to 500 µm. The porous support may also be a sheet- or fibre-like material such as a membrane. The external surface of the porous support thus may be flat (plates, sheets, foils, disks, slides, filters, membranes, woven or nonwoven fabrics, paper) or curved (either concave or convex: spheres, beads, grains, (hollow) fibres, tubes, capillaries, vials, wells in a sample tray).

The pore structure of the internal surface of the porous support may, inter alia, consist of regular, continuous capillary channels or of cavities of irregular (fractal) geometry. Microscopically, it can be smooth or rough, depending on the way of manufacture. The pore system can either extend continuously throughout the entire solid support material or end in (branched) cavities. The rate of an analyte's interfacial equilibration between its solvation in the mobile phase and its retention on the surface of the stationary phase and thus the efficiency of a continuous flow separation system is largely determined by mass transfer via diffusion through the pores of the solid support material and thus by its characteristic distribution of particle and pore sizes. Pore sizes may optionally show up as asymmetric, multimodal and / or spatially (e.g. cross-sectionally) inhomogeneous distributions.

As described above, the porous support has a crosslinked polymer on the surface of the porous support. The crosslinked polymer may be covalently bound with the porous support or be adhered to the porous support. Preferably, the crosslinked polymer is adhered to the porous support.

The preferred polymer for the crosslinkable polymer comprises at least one polymer containing amino groups. Polyvinylamine is strongly preferred. Other suitable polyamines may comprise polyethylene imine, polyallylamine etc. as well as functional polymers other than those containing amino groups, such as polyvinyl alcohol, polyvinyl acetate, polyacrylic acid, polymethacrylic acid, their precursor polymers such as poly(maleic anhydride), polyamides, or polysaccharides (cellulose, dextran, pullulan etc.).

If co-polymers are employed, the preferred co-monomers are simple alkene monomers or polar, inert monomers like vinyl pyrrolidone.

The polymer can be applied to the porous support by all means of a coating known to a person skilled in the art such as absorption, vapor phase deposition, polymerization from the liquid, gas or plasma phase, spin coating, surface condensation, wetting, soaking, dipping, rushing, spraying, damping, evaporation, application of electric fields or pressure, as well as methods based on molecular self-assembly such as, for example, liquid crystals, Langmuir Blodgett- or layer-by-layer film formation. The polymer may thereby be coated directly as a monolayer or as multilayer or as a stepwise sequence of individual monolayers on top of each other.

According to a preferred embodiment of the composite material, the crosslinking degree of the crosslinked polymer is at least 5 %, based on the total number of crosslinkable groups in the crosslinked polymer. More preferred the crosslinking degree is of from 5 to 30 %, more preferred of from 5 to 20 %, most preferred from 10 to 15 %, based on the total number of crosslinkable groups in the crosslinked polymer. The crosslinking degree can easily be adjusted by the stoichiometric amount of the crosslinking reagent used. It is assumed that nearly 100 mol% of the crosslinker reacts and forms crosslinks. This can be verified by analytical methods. The crosslinking degree can be determined by MAS-NMR spectroscopy and quantitative determination of the amount of crosslinker in relation to the amount of polymer. This method is most preferred. The crosslinking degree can also be determined by IR spectroscopy based on e.g. C-O-C or OH vibrations using a calibration curve. Both methods are standard analytical methods for a person skilled in the art.

The crosslinking reagent used for crosslinking the polymer is preferably selected from the group consisting of dicarboxylic acids, diamines, diols and bis-epoxides. In one embodiment the at least one crosslinking reagent is a linear, conformationally flexible molecule of a length of between 1 and 20 atoms.

Preferred molecular weights of the polymers used range from, but are not limited to, 5000 to 50000 g/mol, which is particularly true for polyvinylamine. Polymers having a molecular weight near the lower limit of the range given above have shown to penetrate even narrow pores of the carrier so that solid state materials with high surface areas and consequently with good mass transfer kinetics, resolution and binding capacity can be used in the sorbents of the present invention.

According to a further embodiment the crosslinked polymer carries functional groups. The term "functional group" means any simple, distinct chemical moiety belonging to the crosslinked polymer on the surface of the porous support or to the crosslinkable polymer during preparation of a polymer film on the surface of the porous support. Thereby, the functional group may serve as a ligand to bind analytes or may serve as chemical attachment point or anchor. Functional groups preferably contain at least one weak bond and/or one heteroatom, preferably a group behaving as nucleophil or electrophil.

The preferred functional groups are primary and secondary amino, hydroxyl, and carboxylic acid or ester groups. Depending on the acidity / basicity of the surrounding medium, amino groups may be present as protonated ammonium ions, carboxyl groups as deprotonated carboxylate ions.

According to a further preferred embodiment the functional groups of the crosslinked polymer are at least partly substituted/derivatized with at least one type of ligand. The ligands are used to bind the analytes by an interaction with the sample, wherein the interaction is selected from the group consisting of hydrophobic interaction, hydrophilic interaction, cation exchange, anion exchange, size exclusion and/or metal ion chelation.

The nature of the ligand is variable and depends on the analyte which is to be purified. The ligand may be a straight chain, branched or cyclic aliphatic group, an aromatic or heteroaromatic group which may be substituted or unsubstituted. Preferably the ligand carries heteroatoms, e.g. N, O, P, S atoms and the like which are able to interact with an analyte molecule.

Opposed to the ligands, the functional groups are primarily not designed to interact with analytes, although it indeed cannot be rigorously excluded that they nevertheless do interact to aid in the separation process.

The invention is further directed to the use of the composite material as described above as a stationary phase in chromatography, in particular in affinity chromatography. The present invention is also directed to a method for the preparation of the above-described composite material comprising the steps of:
a) providing a crosslinkable polymer having functional groups,
b) adsorbing said polymer onto the surface of a porous support,
c) crosslinking a defined portion of the adsorbed crosslinkable polymer with at least one crosslinking reagent.

The crosslinking degree of the polymer is adapted to the pore size of the porous support such, that the ratio between the pore size [nm] of the porous support and the crosslinking degree [%] of the crosslinked polymer [PSCL-ratio] is from 0.25 to 20, preferably from 0.5 to 15 and most preferred from 1 to 10.

Adsorbing of the polymer can be technically achieved by all means of coating known to a skilled person which may either occur under natural driving forces or be manually enforced such as spontaneous adsorption, vapour phase deposition, polymerisation from the liquid, gas or plasma phase, spin coating, surface condensation, wetting, soaking, dipping, brushing, spraying, stamping, evaporation, application of electric fields or pressure, as well as all methods based on molecular self-assembly such as, for example, liquid crystals, Langmuir-Blodgett- or layer-by-layer film formation. The polymer may thereby be coated as a polymer film directly as a multilayer or as a stepwise sequence of individual monolayers on top of each other. Single- or multi-point-"adsorption", whether spontaneous or artificially accelerated, is in any case considered as being the first (incomplete) step of any coating process starting from a polymer solution which is in physical contact with the surface of a support. It requires the presence of some at least weakly attractive physical (van der Waals-) or - in case of complementary functionalisation present on the support and / or the polymer - rather specific, non-covalent chemical forces between the solid surface and each single polymer strand and, if multilayers are adsorbed, also between the polymers within the same and different vertically stacked layers in order to form at least a metastable aggregate. Electrostatic forces between charges of opposite sign are often utilised for this purpose, the surface charge of the carrier thereby being given by its zeta potential. Initial adsorption may occur in a loose and irregular fashion which may later transform into a larger degree of two- or three-dimensional order and / or density. This is may be ascribed to some residual mobility of the polymer strands on the surface as a consequence of a steady-state equilibrium between adsorption and desorption processes at individual surface sites and may for example be fostered by annealing. It is usually necessary to further increase the stability of the adsorbed aggregate by the following introduction of covalent bonds between proximate functional groups, in addition to a basic steric (entropic) stabilisation by physical entanglement of the chains. For achieving still increased stabilities, the chains of the polymer film may further be covalently grafted to the carrier material underneath.

After adsorbing the crosslinkable polymer on the surface of the porous support, a crosslinking step follows. The at least one crosslinking reagent is preferably selected from the group consisting of dicarboxylic acids, diamines, diols and bis-epoxides. In one embodiment the at least one crosslinking reagent is a linear, conformationally flexible molecule of a length of between 1 and 20 atoms.

The crosslinkable polymer is adsorbed in form of a polymer film. The term "film of a polymer" or "polymer film" means a two- or preferably three-dimensional synthetic or biosynthetic polymer network of at least one layer, usually between a few and a few ten molecular layers of the crosslinkable polymer. Such a (derivatised or underivatised) polymer network may itself be prepared according to procedures known to a person skilled in the art. The film of a polymer may be of a chemically homogeneous composition, or it may be comprised of at least two different kinds of interpenetrating polymer chains (e.g., polyacrylic acid and a polyamine), either irregularly entangled or in an ordered fashion (layer-by-layer) .

The term "chain" generally refers to the longest continuous main strand and also possible branches of a polymer, along which functional groups are attached. The term is used both to indicate the full backbone length of a dissolved, adsorbed or grafted polymer as employed during sorbent preparation, as well as to indicate the chain segments located between the knots of a crosslinked polymeric mesh, since in the latter case the full length of individual strands is hard to identify.

If a porous polymer is used as the porous support material, it is pointed out that the film of the polymer coated thereon, as described here, will have a different chemical composition. These differences may result from the presence, kind, or density of the functional groups, from lower molecular weights, or from a lower degree of crosslinking. All these parameters add to increased hydrophilicity, solvent swellability / diffusion, and biocompatibility, as well as to diminished unspecific adsorption on the coated surface.

The preferred polymer film comprises at least one polymer containing amino groups. Polyvinylamine is strongly preferred. Other suitable polyamines may comprise polyethylene imine, polyallylamine etc. as well as functional polymers other than those containing amino groups, such as polyvinyl alcohol, polyvinyl acetate, polyacrylic acid, polymethacrylic acid, their precursor polymers such as poly(maleic anhydride), polyamides, or polysaccharides (cellulose, dextran, pullulan etc.).

If co-polymers are employed, the preferred co-monomers are simple alkene monomers or polar, inert monomers like vinyl pyrrolidone.

Preferred molecular weights of the polymers used range from, but are not limited to, 5000 to 50000 g/mol, which is particularly true for polyvinylamine. Polymers having a molecular weight near the lower limit of the range given above have shown to penetrate even narrow pores of the carrier so that solid state materials with high surface areas and consequently with good mass transfer kinetics, resolution and binding capacity can be used in the composite materials of the present invention.

The crosslinkable polymer will be adsorbed and then crosslinked and optionally grafted as a thin adlayer onto the surface of the porous support, either before or after derivatisation with a ligand. The polymer film content of the resulting composite material may range from about 5 % to 30 %, preferably from about 15 % to 20 % by weight, based on the total weight of the composite material. The exact value of the polymer content of the fully functional composite material will also be dependent on the degree of derivatisation, the molecular weight of the ligands, and the specific weight of the chosen porous support. These values correspond to a film thickness in the lower nanometer range.

The coated polymer film can still retain its ability to swell or shrink, the actual film thickness thereby being strongly dependent on the type of solvent being used.

The degree of crosslinking of the polymer film may range from 5 % to 30 % based on the number of functional groups available for crosslinking. Particularly preferred are crosslinkages by functional group condensation, but all other methods known in polymer chemistry, including radical and photochemistry, can be applied. However, crosslinking bonds can also be formed directly between the functional groups of the polymer(s) involved without addition of crosslinking reagents. This is in particular possible if co-polymers or blended polymers are employed which provide at least two different functional groups that exhibit a latent reactivity toward each other, e.g. amine groups and carboxylic acid groups which can form amide bonds between each other after activation. Preferred crosslinks involve formation of covalent C-N bonds, e.g. amide, urethane, urea or secondary / tertiary amine bonds, and may be formed via reaction of either activated carboxylic acids or epoxides with amines.

Intra- and intermolecular crosslinking of the layer will form a stable two- or preferably three-dimensional polymer network and prevent its desorption from the "enwrapped" porous support.

Although crosslinking can be achieved according to all procedures known as state of the art, also incorporating unselective methods based on the generation of radical species anywhere on the polymer chains such as electrochemical, light-or (ionising) radiation-induced methods, the crosslinking step will preferably be carried out only between the functional groups of the polymer using crosslinking reagents which for example are designed to undergo condensation reactions with said functional groups. Linear, conformational flexible molecules, such as [alpha], [omega]-bifunctional condensation reagents, of a length of between 1 and 20 atoms are preferred for crosslinking. Also, two or more crosslinking reagents of different length and / or different reactivity and / or different chain rigidity can be employed, preferably in consecutive steps.

Crosslinking will not be carried out in an exhaustive manner which would lead to a rigid material, but always to a predetermined extent only, i.e. with a defined portion of polymer functional groups, which is easily controllable via the stoichiometric fraction of added crosslinking reagent(s) in relation to available polymer functional groups.

Suitable crosslinking reagents in this respect comprise dicarboxylic acids, diamines, diols, and bis-epoxides, for example 1,10-decanedicarboxylic acid or ethyleneglycol diglycidylether (EGDGE). 4,4'-Biphenyldicarboxylic acid is useful as a rigid crosslinker.

Crosslinking reagents are preferentially chosen to react specifically with the functional groups of the polymer but neither with the template nor with the underlying porous support such as to accomplish stable crosslinks within the polymer film only but not between the polymer film and the support surface.

Anyway, establishing additional crosslinks of the latter type in a moderate number would certainly not alter the properties of the sorbent significantly.

Crosslinks can alternatively be of non-covalent nature, making use of ion pairing between oppositely charged functional groups or with the help of multiply-charged counterions etc.

As used herein, the term "crosslinking degree" is given as the maximum number of crosslinks to be formed in the crosslinking reaction based on the total number of functional groups available for crosslinking. If, as preferred, bifunctional reagents are used for crosslinking, the degree of crosslinking therefore reflects the molar ratio between the amount of crosslinking reagent, which is submitted into the crosslinking reaction, and the number of polymer functional groups available for crosslinking (in such case two functional groups are required per formation of one crosslink) whereby it is assumed that the reaction proceeds nearly quantitatively at the ratios attempted here. In principle, it is possible that both inter-strand and intra- strand crosslinks as well as non-crosslinking end-terminated side chains (from partially reacting crosslinkers) are being formed.

Conversely, the term "grafting" means a covalent anchorage of single polymer chains to the surface of the porous support, preferable formed with functional groups thereon. It would be sufficient if each polymer strand is anchored at at least one arbitrary position along its chain. Better stabilities of the film can be achieved via multi-point grafting so that protruding polymer loops are formed on the surface. The latter method, however, reduces the three-dimensional flexibility of the polymer chains. Single-point attachments are preferably realised through a chain terminus so that the full elongated length of the chain along which preferentially a plurality of functional groups / ligands or only a single one at the opposite terminus may be attached, can point outwards away from the surface. Although the actual conformation of the grafted polymer may be a random coil, the use of high grafting densities on the surface and appropriate solvents can lead to swelling and oriented self-assembling phenomena between neighbouring chains via dispersive interactions such as in the formation of polymer brushes which may be further stabilised by crosslinking.

Preferably, grafting is achieved via mild condensation reactions similar to the crosslinking reactions, but methods involving propagating free radicals, ions, or radical ions such as oxidative or radiation-induced methods could also be applied. The chosen method will depend on the ease, type, and degree of functionalisation of the carrier. Grafting can be achieved in principle via two different techniques: the first technique uses surface-bound monomers or initiators to build up parallel polymer chains by in situ-polymerisation from the surface, whereas in the second technique a polymer chain is first synthesised in its full length in a homogeneous medium, i.e. in the absence of the surface, to which it is only subsequently grafted in an extra step. The latter technique is preferred if a sorbent of the invention is prepared via grafting procedures and constitutes a methodical embodiment of the invention.

In a preferred embodiment of the present invention, the polymer film, also if internally crosslinked by covalent bonds, is not grafted, i.e. covalently linked, to the carrier material underneath, i.e. it is bound thereon by physical and / or chemical adsorption only.

Accordingly, the term "binding" encompasses physical and / or chemical adsorption. The chemical and mechanical stability of the composite material then results from total physical entanglement of the carrier by the crosslinked polymer film. The thickness and density of the polymer film are still sufficient in order to shield very polar or reactive groups on the surface of the porous support, such as phenyl or sulphonate groups in the case of solid polystyrene sulphonate, from accessibility which are otherwise suspected to be cleaved by reagents or to undergo undefined, irreproducible or irreversible interactions with an analyte or its concomitant impurities of the mixture to be separated.

As described above the crosslinkable polymer contains functional groups which may be substituted/derivatized with at least one type of ligand before or after adsorbing the polymer, or before or after crosslinking the polymer.

Polymers containing at least one functional group within their backbone or side chains are preferable since they allow an easy derivatisation with ligands at such functional groups in homogeneous or heterogeneous media. Furthermore, many properties of a polymer in the solid or dissolved state and also its tendency to adsorb spontaneously onto and adhere permanently to the porous support are being determined by its functional groups. Polyelectrolytes are specifically mentioned here.

Co-polymers, whether of alternating, statistical, or block sequence, containing both functional and non-functional units, are also realisable in this respect.

The preferred functional groups are primary and secondary amino, hydroxyl, and carboxylic acid or ester groups. Depending on the acidity / basicity of the surrounding medium, amino groups may be present as protonated ammonium ions, carboxyl groups as deprotonated carboxylate ions.
The term "functional group" means any simple, distinct chemical moiety belonging to the polymer film on the porous support, or to a polymer during preparation of said surface via film adsorption, which may serve as chemical attachment point or anchor and which therefore is, at least in the swollen state of the solid support material or a polymer film covering it, amenable to liquid or solid phase derivatisation by chemical addition or substitution reactions and also to crosslinking. Functional groups will therefore preferably contain at least one weak bond and / or one heteroatom, preferentially a group behaving as nucleophile or electrophile. Less reactive functional groups may need to be activated prior to derivatisation. They can thus both form the structural link between the polymer strands and the residues of the sorbent as well as forming the knots of a crosslinked network.

Opposed to ligands, functional groups are primarily not designed to interact with analytes (although it indeed cannot be rigorously excluded that they nevertheless do interact or aid in the separation process via repulsion of side components) but rather to provide a surface coverage with molecularly-sized spots of defined chemical reactivity that can be converted into the actually interacting residues (derivatisation) or used in the formation of covalent connections (polymer crosslinkage and grafting).
The terms "connections" or "linkages" as used herein shall cover both directly formed covalent bonds as well as an extended series of covalent bonds in a row via a sequence involving multiple atoms. Other chemical moieties down to simple diatomic molecular fragments which may be present on the sorbent or an analyte and which do not fulfill either of these known and specified functions, are simply named "groups".

A set of functional groups can be treated as a plurality of separate, but identical units, and their chemical behaviour will mainly be determined by predictable and reproducible group properties only and to a far less extent by the materials to which they are attached, or their exact position on these materials. Among such functional groups are, just to mention a few, amino groups, hydroxyl groups, thiol groups, carboxylic acid groups, or carboxylic ester groups. Functional groups represent an integral part of the composite material and are thus distributed uniformly over large areas of its surface. Suitable functional groups often exhibit weak acid or base properties and thus give a film-forming polymer the character of an ampholyte. Functional groups in a polymer can either be introduced during polymerisation from the corresponding monomers or by subsequent functional group conversion (polymer-analogous reaction) before or after adsorption onto the carrier. A polymer film can also contain two or more different functional groups either if different monomers are co-polymerised, if functional group conversion is stopped before completion, or if different polymers are layered on top of each other or as interpenetrating networks. The preferred functional groups are primary and secondary amino groups. Particular preference is given to primary amino groups.

The term "derivatisation" means any chemical reaction capable of introducing specific ligands onto the surface of the composite material in order to produce an intermediate or fully functional sorbent, particularly by addition to, or substitution of, its functional groups with a suitable derivatisation reagent containing the ligand or a precursor thereof. The conversion of a functional group into a different but still reactive functional group shall also be covered by the term.

A "precursor" of the ligand may incorporate a masked or protected chemical moiety which can be deprotected or otherwise converted into the final ligand after or simultaneously with the formation of a linkage with the surface or polymer in the derivatisation step. For example, if the polymer contains primary or secondary amino functional groups and derivatisation is made through amide bond formation with these, additional primary or secondary amine moieties to be contained in the residue should initially be protected as e.g. Boc- or Fmoc-derivatives in the derivatisation reagent. Further, if the bond to be formed during the derivatisation reaction between a surface or polymer functional group and a reactive center on the derivatisation reagent leads to the formation of a new chemical moiety which plays a role in the recognition of the analyte, the respective ligands will apparently only be fully developed after derivatisation, and only a part or a functional modification of it is contained as a precursor in the derivatisation reagent. In such case, part of the precursor moiety (a leaving group) may also be split off during the derivatisation reaction (such as a water molecule during a condensation reaction).

Derivatisation (as well as crosslinking) is in each of at least one or optionally multiple steps always being carried out on a "defined portion" of the functional groups. This means that - taking the reactivities of different functional groups and reagents into account - a targeted, predetermined percentage of each given kind of functional groups present in the underivatised polymer is always being converted into functional groups derivatised with the respective ligands chosen. In order to yield homogeneously and reproducibly derivatised sorbents, calculated appropriate amounts of derivatisation reagents are then let to react with the polymer. Full derivatisation (degree of derivatisation = 100 %) can also be attempted, whereby the derivatisation reagent is often used in excess, but this is not a must-have.
The term "ligand" means any distinct chemical moiety or a distinctly identifiable, usually repeatedly occurring, arrangement of chemical moieties of the same or different kind capable of assembling on the nanoscopic scale (by itself or part of itself or within a cluster of ligands of the same or different kind) into a complex or a place of high and / or selective affinity toward at least one complementary structure or surface region of at least one analyte, as long as the affinity is stronger than a mere van der Waals-contact with CH or CH2 repeating units of the lattice or polymer chain on the sorbent surface. Such a place at the solid / liquid interface is, in analogy to the description of specific interactions involving biomacromolecules, called a "binding site".
A ligand can thereby be an entirely synthetic or a natural product or a fragment or combination thereof, but should be amenable to chemical synthesis and / or derivatisation. It may comprise more than one distinct chemical moiety (including chemically unreactive moieties such as, for example, alkyl or alkylene units which are nevertheless capable to engage in hydrophobic or dispersive interactions).

It is also possible to temporarily derivatise functional groups of the polymer film or substituents of the ligands with protecting groups. Said functional groups or substituents can thus be protected during the introduction of one or more further sets of ligands from sometimes undesired reactions with the respective derivatisation reagents which may otherwise lead to uncontrollable accumulation of residues or higher-order substitution patterns such as branching. Once the additional set of residues has been put in place, the protecting groups are usually removed again.

The invention will now be illustrated by several examples which are, however, not limiting to the scope of the invention.

### EXAMPLES

### General

HPLC systems from Dionex (formerly Gynkotek) consist of a four channel low-pressure gradient pump (LPG 580, LPG 680 or LPG 3400), auto sampler (Gina 50, ASI-100 or WPS-300), six-channel column switching valves (Besta), column oven and a diode-array UV detector (UVD 170U, UVD 340S or VWD 3400).

All composite materials employed in examples 1 and 2 were based on the same porous support of sulphonated polystyrene-divinylbenzene copolymer (35 µm mean particle diameter, 100 nm mean pore diameter) covered with a film of crosslinked polyvinylamine. For all chromatographic experiments the sorbents were used in standard stainless steel HPLC columns of 33.5 x 4 mm actual bed size, if not stated otherwise. Columns were packed by flow sedimentation of water-methanol (1:1) suspensions under a pressure of 20 bar.

### Example 1 (comparative example)

The crosslinked polyvinylamine has a crosslinking degree of 2 %. Thus, the PSCL ratio is 50. After 5 h usage under a flow of a water-methanol ratio of 1:1, about 60 % polymeric material of the crosslinked polymer was found in the eluate. Hence, a PSCl-ratio above 25 leads to an unstable composite material.

### Example 2 (example according to the invention)

The crosslinked polyvinylamine has a crosslinking degree of 10 %. Thus, the PSCL ratio is 10. After 5 h usage under a flow with a water-methanol ratio of 1:1, no polymeric material of the crosslinked polymer was found in the eluate. Hence, a PSCl-ratio of 10 also leads to a stable composite material.

Additional examples with the same porous support as above have been carried out which show that at a PSCL-ratio of 25 the loss of the stationary phase starts.

| Pore size [nm] | Crosslinking [%] | PSCL-ratio | Loss of polymer [wt %] |
|---|---|---|---|
| 100 | 20 | 5 | Not observed |
| 100 | 15 | 6.6 | Not observed |
| 100 | 10 | 10 | Not observed |
| 100 | 5 | 20 | 0.3 |
| 100 | 4 | 25 | 5 |
| 100 | 2 | 50 | 60 |

### Example 3 (example according to the invention)

In this example silica gel as anorganic support was used. The pore size was 30 nm and the particle size 10 µm. The support was coated with polyvinyl amine and crosslinked with a degree of 10%. Thus the PSCL ratio is 3. The resulting phase was investigated with respect to the retention of Moxol in isocratic HPLC runs with mobile phase of 30 % ethylacetate and 70 % hexane. Moxol eluates with a k' value of 0.74. The impurities Batmox and Bismox eluate at k'=0.43 to 0.47 and MoxOH at k'= 1.23. This experiment resulted in a very good separation of Moxol.

### Example 4 (comparative example)

In this example silica gel as anorganic support was used. The pore size was 10 nm and the particle size 10 µm. The support was coated with polyvinyl amine and crosslinked with a degree of 50%. Thus the PSCL ratio is 0.20. The same experiment done as in example 3 showed a k'value of just 0.51 with bad separation of the accompanying impurities.
In adition, due to the restricted swelling behavior of the highly crosslinked polymer film (which leads to a very rigid polymer), the polymer film shows beginning cracks and starts to desorb from the surface of the porous support.
The above examples show that within the PSCL-ratio from 0.25 to 20 stable composite materials were obtained which show a very good purification efficiency with no loss of the stationary phase.

## Claims

1. Composite material comprising a porous support and a crosslinked polymer on the surface of the porous support, wherein the ratio between the pore size [nm] of the porous support and the crosslinking degree [%] of the crosslinked polymer [PSCL-ratio] is from 0.25 to 20.

2. Composite material according to claim 1, wherein the porous support has a specific surface area of from 1 m²/g to 1000 m²/g_{.}

3. Composite material according to claim 1 or 2, wherein the porous support has a porosity of from 30 to 80 % by volume.

4. Composite material according to any one of claims 1 to 5, wherein the pore size of the porous support is at least 6 nm.

5. Composite material according to one of claims 1 to 4, wherein the porous support is a polymeric material.

6. Composite material according to one of claims 1 to 5, wherein the porous support is an inorganic material.

7. Composite material according to any one of claims 1 to 6, wherein the crosslinked polymer is covalently bound or adhered to the porous support.

8. Composite material according to any one of claims 1 to 7, wherein the crosslinking degree of the crosslinked polymer is at least 5 %, based on the total number of crosslinkable groups in the crosslinked polymer.

9. Composite material according to any one of claims 1 to 8, wherein the crosslinked polymer carries functional groups.

10. Composite material according to any one of claim 9, wherein the functional groups of the crosslinked polymer are at least partly substituted with at least one type of ligand.

11. Use of the composite material according to any one of claims 1 to 10 as stationary phase in chromatographie.

12. Method for the preparation of a composite material according to claims 1 to 10 comprising the steps of:
a) providing a crosslinkable polymer having functional groups,
b) adsorbing said polymer onto the surface of a porous support,
c) crosslinking a defined portion of the adsorbed crosslinkable polymer with at least one crosslinking reagent.

13. Method according to claim 12, wherein the crosslinking degree of the polymer is adapted to the pore size of the porous support such, that the ratio between the pore size [nm] of the porous support and the crosslinking degree [%] of the crosslinked polymer [PSCL-ratio] is from 1 to 20.

14. Method according to claims 12 or 13, further comprising substituting the functional groups with at least one type of ligand before or after adsorbing the polymer, or before or after crosslinking the polymer.

## Amended claims

### Amended claims in accordance with Rule 137(2) EPC.

**1.** Composite material comprising a porous support and a crosslinked polymer on the surface of the porous support, wherein the ratio between the pore size [nm] of the porous support and the crosslinking degree [%] of the crosslinked polymer is from 0.25 to 20 [nm/%] and wherein the crosslinking degree is of from 5 to 20 %, based on the total number of crosslinkable groups in the crosslinked polymer.

**2.** Composite material according to claim 1, wherein the porous support has a specific surface area of from 1 m²/g to 1000 m²/g.

**3.** Composite material according to claim 1 or 2, wherein the porous support has a porosity of from 30 to 80 % by volume.

**4.** Composite material according to any one of claims 1 to 3, wherein the pore size of the porous support is at least 6 nm.

**5.** Composite material according to one of claims 1 to 4, wherein the porous support is a polymeric material.

**6.** Composite material according to one of claims 1 to 5, wherein the porous support is an inorganic material.

**7.** Composite material according to any one of claims 1 to 6, wherein the crosslinked polymer is covalently bound or adhered to the porous support.

**8.** Composite material according to any one of claims 1 to 7, wherein the crosslinked polymer carries functional groups which serve as chemical attachment point or anchor.

**9.** Composite material according to any one of claim 8, wherein the functional groups of the crosslinked polymer are at least partly substituted with at least one type of ligand which is capable of binding an analyte by an interaction, selected from the group consisting of hydrophobic interaction, hydrophilic interaction, cation exchange, anion exchange, size exclusion and/or metal ion chelation.

**10.** Use of the composite material according to any one of claims 1 to 9 as stationary phase in chromatographie.

**11.** Method for the preparation of a composite material according to claims 1 to 9 comprising the steps of:
a) providing a crosslinkable polymer having functional groups which serve as chemical attachment point or anchor,
b) adsorbing said polymer onto the surface of a porous support,
c) crosslinking 5 to 20 % of the total number of crosslinkable groups of the adsorbed crosslinkable polymer with at least one crosslinking reagent such, that the ratio between the pore size [nm] of the porous support and the crosslinking degree [%] of the crosslinked polymer is from 0,25 to 20 [nm/%].

**12.** Method according to claim 12 , further comprising substituting the functional groups with at least one type of ligand which is capable of binding an analyte by an interaction, selected from the group consisting of hydrophobic interaction, hydrophilic interaction, cation exchange, anion exchange, size exclusion and/or metal ion chelation before or after adsorbing the polymer, or before or after crosslinking the polymer.
